# EUROPÄISCHE PATENTSCHRIFT

(11) **EP 1 485 280 B1**
(45) Veröffentlichungstag und Bekanntmachung des Hinweises auf die Patenterteilung: **30.12.2009**
(21) Anmeldenummer: 03718691.3
(22) Anmeldetag: 17.03.2003
(51) Int. Cl.: B60S 1/40

(54) **WISCHVORRICHTUNG**
WIPER DEVICE
DISPOSITIF D'ESSUIE-GLACE

(30) Priorität: 21.03.2002 DE 10212441
(43) Veröffentlichungstag der Anmeldung: 15.12.2004
(73) Patentinhaber: VALEO SYSTEMES D'ESSUYAGE, 78321 La Verrière (FR)
(72) Erfinder: SCHOLL, Wolfgang, 74376 Gemmrigheim (DE); FINK, Andreas, 71723 Grossbottwar (DE); SCHREMMER, Gerhard, 74321 Bietigheim-Bissingen (DE); ERNSTMEIER, Heiko, 74321 Bietigheim-Bissingen (DE)
(74) Vertreter: Jahn, Wolf-Diethart
(86) Internationale Anmeldenummer: PCT/EP2003/002754
(87) Internationale Veröffentlichungsnummer: WO 2003/080409

(56) Entgegenhaltungen:
- EP-A- 0 301 822
- WO-A-00/21811
- WO-A-01/15946
- WO-A-02/40328
- DE-A- 3 240 850
- FR-A- 1 308 353
- US-A- 4 348 782

## Beschreibung

Die Erfindung betrifft eine Wischvorrichtung, insbesondere zum Wischen von Fahrzeugscheiben, gemãß dem Oberbegriff von Patentanspruch 1.

Bei derartigen Wischvorrichtungen gewährleisten die Tragmittel, insbesondere zwei in Längsnuten der Wischleiste liegende, wandartig langgestreckte Federschienen, eine optimale Verteilung des vom Wischarm ausgehenden Wischblatt-Anpressdrucks an der zu wischenden Scheibe. Dazu sind die Tragmittel in unbelastetem Zustand, wenn also das Wischblatt nicht an der Scheibe anliegt, entsprechend vorgebogen und weisen eine definierte Krümmung auf. Derartige Flachwischblätter weisen folglich keine Trag- und Krallenbügelkonstruktion auf, wie sie aus dem Stand der Technik in vielfältiger Art und Weise bekannt geworden ist.

Aus der WO 00/21811 A1 ist eine Wischvorrichtung der eingangs genannten Art bekannt geworden. Das Flachwischblatt ist mit Verbindungsmitteln ausgestattet, die ein an den Tragmitteln fest angeordnetes Trägerelement und ein gegenüber dem Trägerelement bedingt verschwenkbar angeordnetes Verbindungselement umfassen, wobei das Verbindungselement mit dem freien Ende des Wischarms verbindbar ist. Bei dieser Wischvorrichtung ist die notwendige drehbare Lagerung zwischen Flachwischblatt und Wischarm in das Flachwischblatt integriert. Das freie Ende des Wischarms wird mit dem Verbindungselement des Wischblatts verbunden, die schwenkbare Bewegung erfolgt zwischen Verbindungselement und Trägerelement. Aus der gesamten WO 00/21811 A1 ist jedoch nicht ersichtlich, wie die Verbindung zwischen Wischarm und Wischblatt zu realisieren ist bzw. welche Mittel für eine solche Verbindung vorgesehen sind.

Der vorliegenden Erfindung liegt deshalb die Aufgabe zugrunde, eine eingangs genannte, bekannte Wischvorrichtung dahingehend weiterzubilden, dass eine sichere Lagerung des Flachwischblatts am Wischarm realisiert wird, wobei die Lagerung möglichst flach bauen soll, einem geringen Verschleiß unterliegen soll, kostengünstig zu realisieren sein soll und vor Umwelteinflüssen geschützt sein soll. Außerdem soll sich eine günstige Aerodynamik ergeben.

Die Erfindung zeichnet sich dadurch aus, dass das freie Ende des Wischarms mehrere, vorzugsweise zwei, sich in Längsrichtung erstreckende Zungen aufweist, die im montierten Zustand in an dem Verbindungselement vorgesehene Zungenaufnahmen eingreifen. Mittels derartigen Zungen und zugehörigen Zungenaufnahmen kann ein formschlüssiges Fügen des freien Endes des Wischarms mit dem Verbindungselement auf einfache Art und Weise erfolgen. Die Zungen sind hierbei einstückig mit dem freien Ende des Wischarms ausgebildet und ragen wenigstens abschnittsweise in die der Scheibe zugewandten Richtung. Dadurch sind die Zungen weder im unmontierten noch im montierten Zustand des Flachwischblatts störend.

Bei der Wischvorrichtung ist vorgesehen, dass die Verbindungsmittel ein an den Tragmitteln fest angeordnetes Trägerelement und ein gegenüber dem Trägerelement bedingt verschwenkbar angeordnetes Verbindungselement umfassen, wobei das Verbindungselement mit dem freien Ende des Wischarms lösbar verbindbar ist. Bei der erfindungsgemäßen Wischvorrichtung wird folglich die Schwenklagerung wischblattseitig realisiert. Die notwendige drehbare Lagerung zwischen Flachwischblatt und Wischarm wird komplett in das Flachwischblatt integriert. Das freie Ende des Wischarms wird starr mit dem Verbindungselement verbunden, die schwenkbare Bewegung erfolgt zwischen Verbindungselement und Trägerelement. Dadurch wird die Bauhöhe sehr flach gehalten. Außerdem muss kein Freiraum zwischen den sich relativ zum Wischarm bewegenden Bauteilen des Flachwischblatts und dem Wischarm bereitgestellt werden. Ferner ist die drehbare Lagerung nun weniger aufwändig ausgestaltbar, da sie Teil des auswechselbaren Verschleißteils Flachwischblatt ist.

Gemäß einer Ausgestaltung der Erfindung erfolgt das Verbinden des Wischarms mit dem Verbindungselement vorteilhafterweise in Richtung der Längsachse des Wischarms, wobei die Zungen beim Verbinden von den Zungenaufnahmen wenigstens abschnittsweise formschlüssig aufgenommen werden. Die Zungen können dabei so ausgebildet sein, dass sie ein erleichtertes Einführen in die Zungenaufnahmen ermöglichen und damit auch als Fügehilfe dienen.

Eine weitere Ausgestaltung der Erfindung zeichnet sich dadurch aus, dass die Stirnseite des freien Endes des Wischarms im montierten Zustand wenigstens abschnittsweise formschlüssig an einer Abstützkante des Verbindungselements anliegt. Dadurch wird eine definierte Lage des Flachwischblatts gegenüber dem freien Ende des Wischarms erreicht. Vorzugsweise ist die Abstützkante derart ausgebildet, dass sie der Kontur des freien Endes des Wischarms folgt und damit eine weitgehend ebene und aerodynamische Oberfläche erzielt wird.

Vorteilhafterweise weist das freie Ende des Wischarms weitgehend quer zur Längsrichtung des Wischarms und vorzugsweise weitgehend senkrecht zur Scheibe verlaufende Halteabschnitte auf, die im montierten Zustand zusammenwirken mit an dem Verbindungselement angeordneten Betätigungsabschnitten, die bei Betätigen ein Lösen des Wischblatts von dem Wischarm ermöglichen. Im montierten Zustand wird das freie Ende des Wischarms folglich zwischen insbesondere der Abstützkante und den Betätigungsabschnitten in Längsrichtung gehalten. Ein Lösen in zur Scheibe senkrechter Richtung ist aufgrund der in den Zungenaufnahmen vorhandenen Zungen nicht möglich. Das freie Ende des Wischarms ist folglich starr an dem Verbindungselement angeordnet.

Die Halteabschnitte können vorteilhafterweise als Haltekanten ausgebildet sein, die im montierten Zustand von den Betätigungsabschnitten derart hinterrastet werden, dass ein Bewegen und Lösen in Längsrichtung des Verbindungselements gegenüber dem Wischarm verhindert wird. Zum Montieren des Flachwischblatts an dem freien Ende des Wischarms werden folglich die Laschen in die Laschenaufnahmen eingeführt und das Flachwischblatt wird so weit auf das freie Ende des Wischarms aufgeschoben, bis zum einen die freie Stirnseite des Wischarms an der Abstützkante formschlüssig anliegt und zum anderen die Betätigungsabschnitte die Haltekanten des freien Endes des Wischarms hinterrasten.

Dabei ragen die Betätigungsabschnitte vorteilhafterweise nicht über die Außenkontur des freien Endes des Wischarms hinaus. Vorzugsweise schließen die Betätigungsabschnitte bündig an die Außenkontur des Wischarms an oder treten hinter diese zurück. Dadurch wird ein ungewolltes, versehentliches Betätigen der Betätigungsabschnitte ausgeschlossen.

Bei einer bevorzugten Ausführungsform der Erfindung sind die Betätigungsabschnitte an den freien Enden von Federzungen angeordnet, die jeweils an den gegenüberliegenden Seiten des Verbindungselements sich in Längsrichtung erstreckend angeordnet sind, so dass sie weitgehend parallel zur Scheibe und in aufeinander zugewandter Richtung gegen eine Vorspannkraft betätigbar sind. Dies hat den Vorteil, dass die Betätigungsabschnitte platzsparend, zuverlässig und in einfacher Art und Weise bereitgestellt werden. Vorteilhafterweise sind insbesondere keine weiteren Bauteile erforderlich.

Eine besonders bevorzugte Ausführungsform der Erfindung zeichnet sich dadurch aus, dass das freie Ende des Wischarms einen U-Profilabschnitt umfasst, dessen offene Seite in Richtung der zu wischenden Scheibe weist. Dies hat den Vorteil, dass die Verbindungsmittel des Flachwischblatts von dem U-Profil vollständig abdeckbar und damit geschützt sind. Verunreinigungen können deshalb nicht ohne Weiteres die schwenkbare Anordnung Verbindungselement - Trägerelement nachteilig beeinflussen.

Vorteilhafterweise umgreift und/oder hintergreift der U-Profilabschnitt im montierten Zustand das Verbindungselement zur Aufnahme von Querkräften wenigstens abschnittsweise formschlüssig. Insbesondere der Abschnitt des U-Profilabschnitts, der zwischen der Abstützkante des Verbindungselements und den Betätigungsabschnitten des Verbindungselements liegt, dient zur Aufnahme von auf das Flachwischblatt wirkenden Querkräften.

Die Zungen sind vorzugsweise an dem Quersteg des U-Profilabschnitts und die Halteabschnitte an den Schenkeln des U-Profilabschnitts angeordnet. Dies ermöglicht ein relativ einfaches Verbinden des freien Endes des Wischblatts mit dem Verbindungsabschnitt.

Eine Weiterbildung der Erfindung zeichnet sich dadurch aus, dass das freie Ende des Wischarms und vorzugsweise der Quersteg des U-Profilabschnitts wenigstens eine Aussparung aufweist, in die das Verbindungselement wenigstens abschnittsweise eingreift. Hierdurch kann eine zusätzliche Stabilität der Verbindung zwischen Wischarm und Verbindungselement erreicht werden.

Vorteilhafterweise weist das Verbindungselement einen im Querschnitt weitgehend U-förmigen Abschnitt auf, dessen Schenkel im montierten Zustand das Trägerelement um- und/oder hintergreifen, wobei zwischen den Schenkeln und dem Trägerelement Schwenkmittel angeordnet sind. Ein derartiger Aufbau weist eine relativ geringe, senkrecht zur Scheibe gerichtete Bauhöhe auf. Dennoch ist eine ausreichende Verschwenkbarkeit zwischen dem Trägerelement und dem Verbindungselement möglich.

Dabei kann vorgesehen sein, dass das Verbindungselement bzw. das Trägerelement quer zur Längsrichtung verlaufende, in einer Linie liegende Achszapfen aufweist, die zur wenigstens bedingten Verschwenkbarkeit wenigstens abschnittsweise in an dem Trägerelement bzw. Verbindungselement vorgesehene Zapfenaufnahmen eingreifen. Die Achszapfen und die zugehörigen Zapfenaufnahmen realisieren folglich die zwischen den Schenkeln des Verbindungselements und dem Trägerelement vorgesehenen Schwenkmittel.

Erfindungsgemäß ist weiterhin denkbar, dass die beiden Schenkel des Verbindungselements und das Trägerelement quer zur Längsrichtung verlaufende, in einer Linie liegende Durchbrüche, insbesondere in Form von Bohrungen, aufweisen, die einen Achsbolzen zur bedingten Verschwenkbarkeit aufnehmen.

Um eine Reduzierung der Einzelteile der Wischvorrichtung zu erreichen, ist bei einer weiteren Ausführungsform der Erfindung vorgesehen, dass das Trägerelement unmittelbar an den Tragmitteln angeordnet ist. Dabei kann das Trägerelement beispielsweise Aufnahmeabschnitte zur Aufnahme von den Tragmitteln in Form von den Federschienen umfassen. Zur Fixierung des Trägerelements an den Federschienen kann das Trägerelement beispielsweise mit den Federschienen gefügt sein, beispielsweise durch Schweißen, Kleben, Klemmen oder dergl.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: eine erfindungsgemäße Wischvorrichtung in perspektivischer Draufsicht;
- Figur 2: das Flachwischblatt der Wischvorrichtung gemäß Figur 1;
- Figur 3: die Unteransicht einer erfindungsgemäßen Wischvorrichtung ohne Wischgummi und ohne Tragmittel;
- Figur 4: einen Längsschnitt durch die Wischvorrichtung gemäß Figur 1; und
- Figur 5: einen Querschnitt durch die Wischvorrichtung gemäß Figur 1.

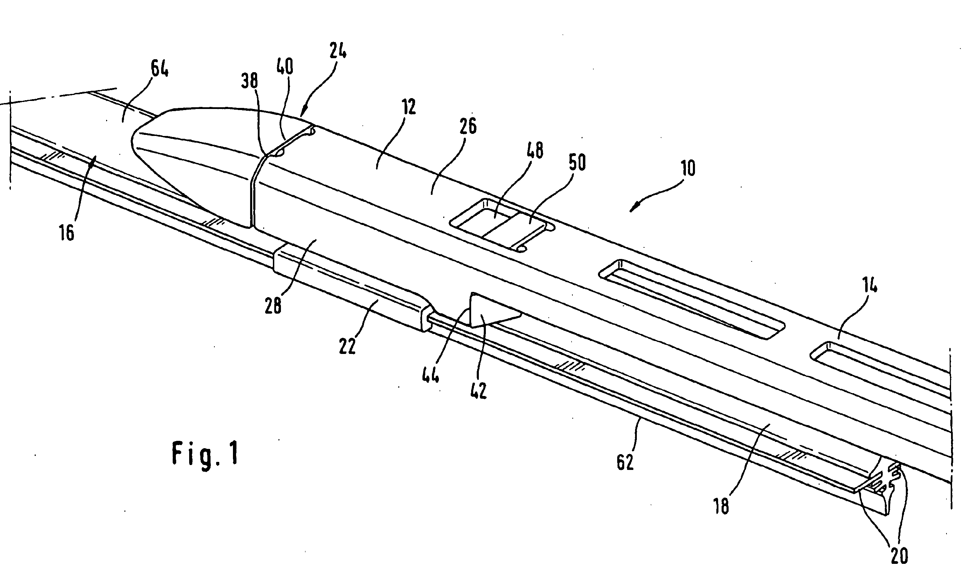

Figur 1 zeigt eine Wischvorrichtung 10 zum Wischen von Fahrzeugscheiben. Dargestellt ist das freie Ende 12 eines antreibbaren Wischarms 14 und der Ausschnitt eines Flachwischblatts 16, das mit dem freien Ende 12 des Wischarms 14 verbunden ist. Das Flachwischblatt 16 besteht aus einem Wischgummi 18, das Wischgummi 18 unterstützenden Tragmitteln 20, einem an den Tragmitteln 20 angeordneten Tägerelement 22 und einem gegenüber dem Trägerelement 22 bedingt verschwenkbar angeordneten Verbindungselement 24. Die Tragmittel 20 sind in Form von zwei langgestreckten Federschienen, die in entsprechenden Längsnuten des Wischgummis 20 liegen, ausgebildet.

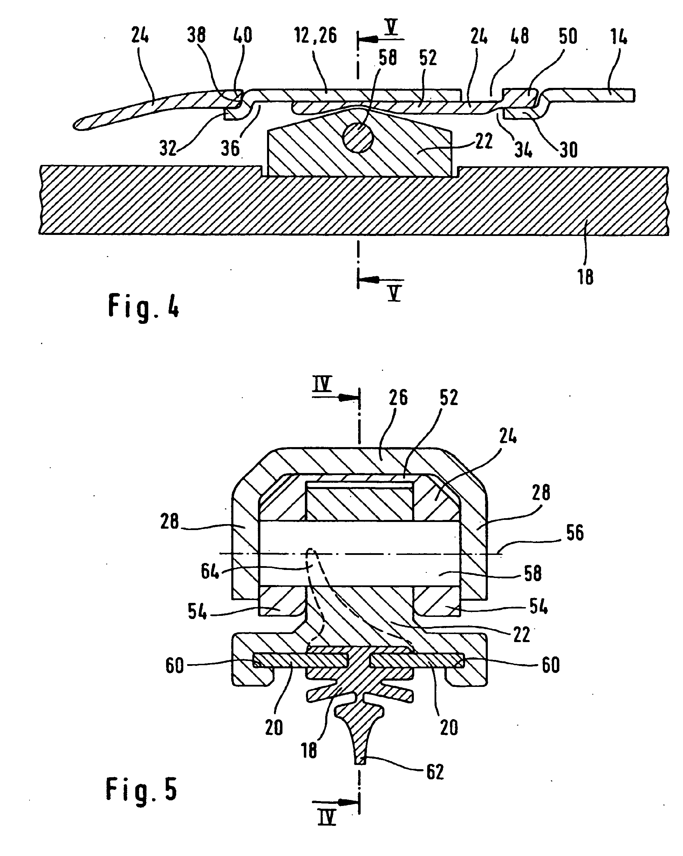

Aus der Figur 1 und der Figur 5 wird deutlich, dass das freie Ende 12 des Wischarms 14 U-profilartig ausgebildet ist und einen Quersteg 26 und zwei Schenkel 28 aufweisen. In dem in der Figur 1 gezeigten montierten Zustand umgreift das freie Ende 12 des Wischarms 14 das Verbindungselement 24 weitgehend formschlüssig. Dadurch können auf das Flachwischblatt 16 wirkende Querkräfte auf den Wischarm 14 übertragen werden.

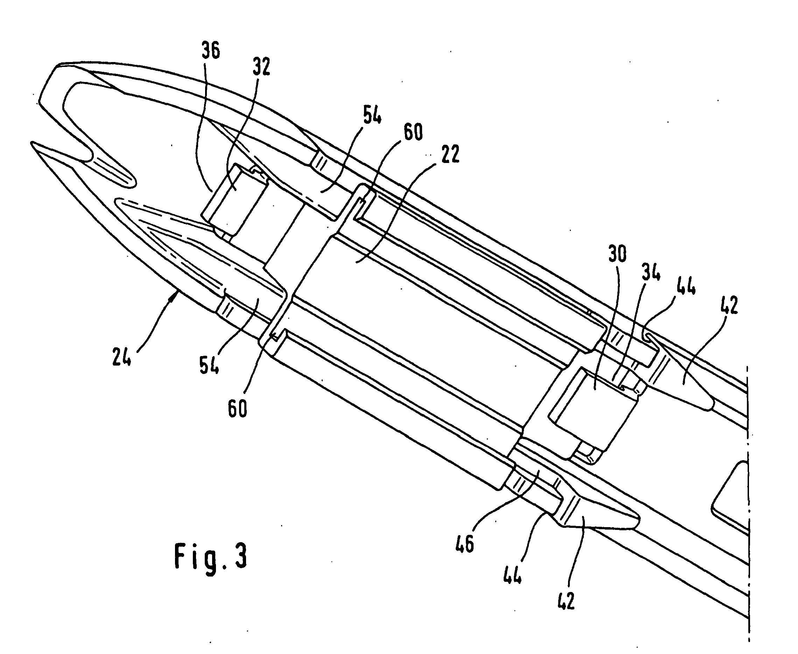

Das freie Ende 12 des Wischarms 14 weist an dem Quersteg 26 zwei sich in Längsrichtung erstreckende Zungen 30 und 32 auf, die einstückig mit dem Wischarm 14 ausgebildet sind und in der der Scheibe bzw. die dem Wischgummi 18 zugewandten Richtung ragen. Die Zungen 30 und 32 sind insbesondere in Figur 3 und 4 deutlich zu erkennen. In Figur 3, in der die Unteransicht des Wischarms mit daran angeordnetem Verbindungselement 24 und Trägerelement 22 dargestellt ist, ist deutlich zu erkennen, wie die Zungen 30 und 32 in an dem Verbindungselement 24 vorgesehene Zungenaufnahmen 34 und 36 eingreifen.

Aus Figur 1 und Figur 4 wird deutlich, dass im montierten Zustand die Stirnseite 38 des freien Endes 12 des Wischarms 14 an einer Abstützkante 40 des Verbindungselements 24 anliegt. Zum Montieren des Flachwischblatts 16 mit dem Wischarm 14 werden folglich die beiden Zungen 30 und 32 in die beiden Zungenaufnahmen 34 und 36 eingeführt und das Verbindungselement 24 so weit auf das freie Ende 12 des Wischarms 14 aufgeschoben, bis die Stirnseite 38 an der Abstützkante 40 zum Anliegen kommt.

In der montierten Position hinterrasten zwei Betätigungsabschnitte 42 des Verbindungselements 24 an wischarmseitigen Halteabschnitten in Form von Haltekanten 44. Die Haltekanten 44 verlaufen weitgehend quer zur Längsrichtung des Wischarms 14 und weitgehend senkrecht zur Scheibe. Die Betätigungsabschnitte 42 sind jeweils an den freien Enden von zwei gegenüberliegenden, sich in Längsrichtung erstreckenden Federzungen 46 angeordnet. Zum Lösen des Flachwischblatts 16 von dem Wischarm 14 können die Betätigungsabschnitte 42 in aufeinander zugewandter Richtung gegen eine Vorspannkraft, die aus der Elastizität der Federzungen 46 resultiert, betätigt werden. Werden die Betätigungsabschnitte 42 in Richtung der Mittellängsachse des Flachwischblatts 16 gedrückt, so lässt sich das Flachwischblatt 16 in Längsrichtung von dem Wischarm 14 abnehmen.

Der Abstand zwischen der Stirnseite 38 und den Haltekanten 44 entspricht im Wesentlichen dem Abstand zwischen der Abstützkante 40 und den der Abstützkante 40 zugewandten, die Haltekante 44 hinterrastenden Bereichen der Betätigungsabschnitte 42. Dadurch wird gewährleistet, dass das freie Ende 12 des Wischarms 14 mit dem Verbindungselement 24 sicher verrastet.

Vorteilhafterweise ragen die Betätigungsabschnitte nicht über die Außenkontur des Wischarms 14 hinaus.

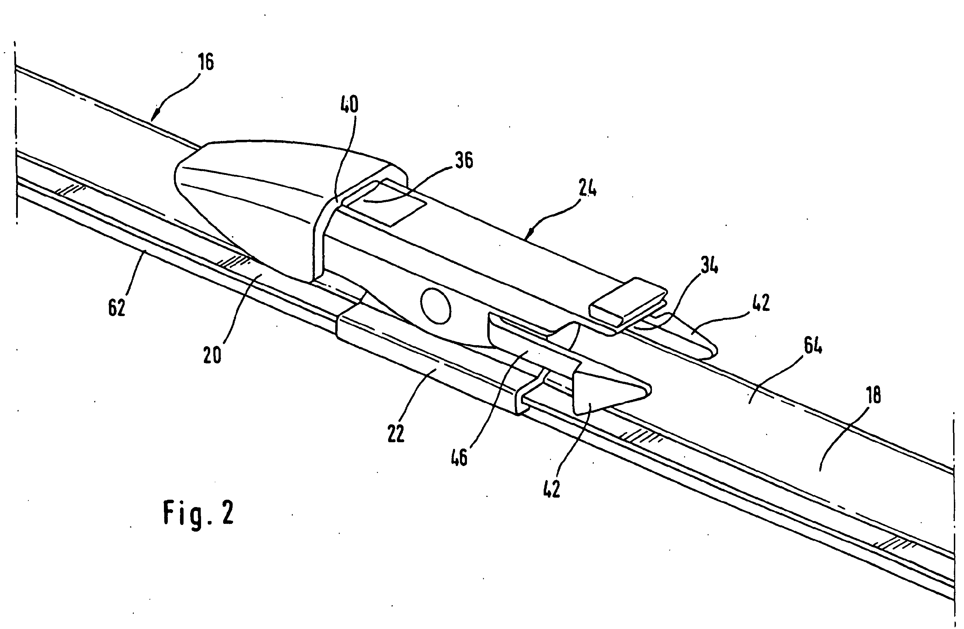

Wie insbesondere aus Figur 2 und 3 deutlich wird, sind die Betätigungsabschnitte 42 in Unteransicht bzw. im Längsschnitt keilförmig ausgebildet. Dadurch wird ein Aufschieben des Verbindungselements 24 auf das freie Ende 12 des Wischarms 14 vereinfacht.

Aus Figur 1 und 4 wird deutlich, dass der Wischarm 14 bzw. der Quersteg 26 eine Aussparung 48 aufweist, in die im montierten Zustand ein Abschnitt 50 des Verbindungselements 24 eingreift. Die parallel zur Längsrichtung verlaufenden Seiten des Abschnitts 50 liegen dabei bündig an den Innenseiten der Aussparung 48 an. Hierdurch wird die Stabilität der Verbindung zwischen dem freien Ende 12 des Wischarms 14 und dem Verbindungselement 24 verbessert.

Aus insbesondere der Figur 5 geht deutlich hervor, dass das Verbindungselement 24 im Querschnitt U-profilförmig mit einem Quersteg 52 und zwei Schenkeln 54 ausgebildet ist. Die beiden Schenkel 54 umgreifen das Trägerelement 24 weitgehend formschlüssig. Sie und das Trägerelement 22 weisen eine entlang einer Achse 56 verlaufende Bohrung auf, innerhalb welcher ein Achszapfen 58 angeordnet ist. Dadurch wird eine veschwenkbare Lagerung zwischen dem Verbindungselement 24 und dem Trägerelement 22 erreicht. Das Trägerelement 22 weist ferner zwei einander gegenüberliegende Aufnahmenuten 60 zur Aufnahme der einander abgewandten Längsseiten der das Tragmittel 20 bildenden Federschienen auf. Zur Befestigung der Federschienen 20 in den Aufnahmenuten 60 können verschiedene Mittel, beispielsweise Befestigungsschrauben, Befestigungsbolzen, Klebemittel, Schweißmittel oder dergl. Verwendung finden. Aus Figur 5 wird deutlich, dass das Wischgummi 18 eine der zu wischenden Scheibe zugewandte Wischleiste 62 sowie einen der Wischleiste 62 abgewandten spoilerartigen Ansatz 64 aufweist.

## Patentansprüche

1. Wischvorrichtung (10), insbesondere zum Wischen von Fahrzeugscheiben, mit einem antreibbaren Wischarm (14), mit einem an dem Wischarm (14) anordenbaren Flachwischblatt (16), das ein Wischgummi (18), das Wischgummi (18) unterstützende Tragmittel (20), welche vorzugsweise in Form von bandartig langgestreckten Federschienen ausgebildet sein können, und Verbindungsmittel zur Anbindung an das freie Ende (12) des Wischarms (14) umfasst, wobei die Verbindungsmittel ein an den Tragmitteln (20) fest angeordnetes Trägerelement (22) und ein gegenüber dem Trägerelement (22) bedingt verschwenkbar angeordnetes Verbindungselement (24) umfassen und das Verbindungselement (24) mit dem freien Ende (12) des Wischarms (14) lösbar verbindbar ist, **dadurch gekennzeichnet, dass** das freie Ende (12) des Wischarms (14) mehrere, vorzugsweise zwei, sich in Längsrichtung erstreckende Zungen (30, 32) aufweist, die im montierten Zustand in an dem Verbindungselement (24) vorgesehene Zungenaufnahmen (34, 36) eingreifen, und, dass die Zungen (30, 32) einstückig mit dem freien Ende (12) des Wischarms (14) ausgebildet sind und wenigstens abschnittsweise in die der Scheibe zugewandten Richtung ragen.

2. Wischvorrichtung (10) nach Anspruch 1, **dadurch gekennzeichnet, dass** das Verbinden des Wischarms (12) mit dem Verbindungselement (24) in Richtung der Längsachse des Wischarms (14) erfolgt, wobei die Zungen (30, 32) von den Zungenaufnahmen (34, 36) aufgenommen werden.

3. Wischvorrichtung (10) nach einem der vorhergehenden Ansprüche, **dadurch gekennzeichnet, dass** die Stirnseite (38) des freien Endes (12) des Wischarms (14) im montierten Zustand wenigstens abschnittsweise formschlüssig an einer Abstützkante (40) des Verbindungselements (24) anliegt.

4. Wischvorrichtung nach einem der vorhergehenden Ansprüche, **dadurch gekennzeichnet, dass** das freie Ende (12) des Wischarms (14) weitgehend quer zur Längsrichtung des Wischarms (14) und vorzugsweise weitgehend senkrecht zur Scheibe verlaufende Halteabschnitte (44) aufweist, die im montierten Zustand zusammenwirken mit an dem Verbindungselement (24) angeordneten Betätigungsabschnitten (42), die bei Betätigung ein Lösen des Wischblatts (16) von dem Wischarm ermöglichen.

5. Wischvorrichtung (10) nach Anspruch 4, **dadurch gekennzeichnet, dass** die Halteabschnitte (44) als Haltekanten ausgebildet sind, die im montierten Zustand von den Betätigungsabschnitten (42) derart hinterrastet werden, dass ein Bewegen des Verbindungselements (24) gegenüber dem Wischarm (14) verhindert wird.

6. wischvorrichtung (10) nach Anspruch 5, **dadurch gekennzeichnet, dass** die Betätigungsabschnitte (42) nicht über die Außenkontur des freien Endes des Wischarms (14) hinausragen.

7. Wischvorrichtung (10) nach Anspruch 4, 5 oder 6, **dadurch gekennzeichnet, dass** die Betätigungsabschnitte (42) an den freien Enden von Federzungen (46) angeordnet sind, die jeweils an den sich gegenüberliegenden Seiten des Verbindungselements (24) sich in Längsrichtung erstreckend angeordnet sind, so dass sie weitgehend parallel zur Scheibe und in aufeinander zugewandter Richtung gegen eine Vorspannkraft betätigbar sind.

8. Wischvorrichtung (10) nach einem der vorhergehenden Ansprüche, **dadurch gekennzeichnet, dass** das freie Ende des Wischarms (14) einen U-Profilabschnitt umfasst, dessen offene Seite in Richtung der zu wischenden Scheibe weist.

9. Wischvorrichtung (10) nach Anspruch 8, **dadurch gekennzeichnet dass** der U-Profilabschnitt im montierten Zustand das Verbindungselement (24) zur Aufnahme von Querkräften wenigstens abschnittsweise formschlüssig um- und/oder hintergreift.

10. Wischvorrichtung (10) nach Anspruch 8, **dadurch gekennzeichnet, dass** die Zungen (30, 32) an dem Quersteg (26) und die Halteabschnitte (44) an den Schenkeln (28) des U-Profilabschnitt angeordnet sind.

11. Wischvorrichtung (10) nach einem der vorhergehenden Ansprüche, **dadurch gekennzeichnet, dass** das freie Ende des Wischarms (14) und vorzugsweise der Quersteg (26) des U-Profilabschnitts wenigstens eine Aussparung (48) aufweist, in die das Verbindungselement (24) wenigstens abschnittsweise eingreift.

12. Wischvorrichtung (10) nach einem der vorhergehenden Ansprüche, **dadurch gekennzeichnet, dass** das Verbindungselement (24) einen im Querschnitt weitgehend U-förmigen Abschnitt aufweist, dessen Schenkel (54) im montierten Zustand das Trägerelement (22) um- und/oder hintergreifen, wobei zwischen den Schenkeln (54) und dem Trägerelement (22) Schwenkmittel angeordnet sind.

13. Wischvorrichtung (10) nach einem der vorhergehenden Ansprüche, **dadurch gekennzeichnet, dass** das Verbindungselement (24) bzw. das Trägerelement (22) quer zur Längsrichtung verlaufende, in einer Linie (56) liegende Achszapfen (58) aufweist, die zur wenigstens bedingten Verschwenkbarkeit wenigstens abschnittsweise in an dem Trägerelement (22) bzw. Verbindungselement (24) vorgesehene Zapfenaufnahmen eingreifen.

14. Wischvorrichtung (10) nach Anspruch 12 und 13, **dadurch gekennzeichnet, dass** die beiden Schenkel (54) des Verbindungselements (24) und das Trägerelement (22) quer zur Längsrichtung verlaufende, in einer Linie (56) liegende Durchbrüche aufweisen, die einen Achsbolzen (58) aufnehmen.

15. Wischvorrichtung (10) nach einem der vorhergehenden Ansprüche, **dadurch gekennzeichnet, dass** das Trägerelement (22) unmittelbar an dem Tragmittel (20) angeordnet ist.

## Claims

1. Wiper device (10), particularly for wiping vehicle windscreens, comprising a drivable wiper arm (14), with a flat wiper blade (16) positionable on the wiper arm (14), which (wiper blade) comprises a wiping rubber (18), the support elements (20) bearing the wiping rubber (18), which (support elements) may preferably be designed in the form of strip-like elongated spring rails and means of connection for connection to the free end (12) of the wiper arm (14), wherein the means of connection comprise a carrier element (22) firmly arranged on the support elements (20) and a connecting element (24) arranged to be partially pivotable in relation to the carrier element (22) and the connecting element (24) is detachably connectable to the free end (12) of the wiper arm (14), **characterised in that** the free end (12) of the wiper arm (14) presents several, preferably two, tongues (30, 32) extending in the longitudinal direction, which in the installed state engage in tongue receptacles (34, 36) provided on the connecting element (24) and that the tongues (30, 32) are designed in one piece with the free end (12) of the wiper arm (14) and project at least in sections in the direction facing the windscreen.

2. Wiper device (10) according to claim 1, **characterised in that** connection of the wiper arm (12) to the connecting element (24) is performed in the direction of the longitudinal axis of the wiper arm (14), wherein the tongues (30, 32) are received by the tongue receptacles (34, 36).

3. Wiper device (10) according to one of the above claims, **characterised in that** the front face (38) of the free end (12) of the wiper arm (14) in the installed state at least in sections abuts with a supporting edge (40) of the connecting element (24).

4. Wiper device according to one of the above claims, **characterised in that** the free end (12) of the wiper arm (14) presents retaining sections (44) running essentially crossways in relation to the longitudinal axis of the wiper arm (14) and preferably essentially vertically in relation to the windscreen, which in the installed state interact with operating sections (42) arranged on the connecting element (24), which on operation, allow detachment of the wiper blade (16) from the wiper arm.

5. Wiper device (10) according to claim 4, **characterised in that** the retaining sections (44) are designed as retaining edges, which in the installed state are engaged from behind by the operating sections (42) in such a manner that movement of the connecting element (24) in relation to the wiper arm (14) is prevented.

6. Wiper device (10) according to claim 5, **characterised in that** the operating sections (42) do not project beyond the external outline of the free end of the wiper arm (14).

7. Wiper device (10) according to claim 4, 5 or 6, **characterised in that** the operating sections (42) are arranged on the free ends of spring tongues (46), which are respectively arranged extending in the longitudinal direction on the opposite sides of the connecting element (24), so that they are operable essentially parallel to the windscreen and in a direction facing each other against a pre-stressing force.

8. Wiper device (10) according to one of the above claims, **characterised in that** the free end of the wiper arm (14) comprises a U profile section, the open side of which faces in the direction of the windscreen to be wiped.

9. Wiper device (10) according to claim 8, **characterised in that** the U profile section in the installed state engages at least in sections positively around and/or behind the connecting element (24) in order to take up shear forces.

10. Wiper device (10) according to claim 8, **characterised in that** the tongues (30, 32) are arranged on the transverse bridge (26) and the retaining sections (44) on the sides (28) of the U profile section.

11. Wiper device (10) according to one of the above claims, **characterised in that** the free end of the wiper arm (14) and preferably the transverse bridge (26) of the U profile section present at least one recess (48) in which the connecting element (24) engages at least in sections.

12. Wiper device (10) according to one of the above claims, **characterised in that** the connecting element (24) presents an essentially U-shaped section in the cross-section, the sides (54) of which in the installed state engage around and/or behind the carrier element (22), wherein means of pivoting are arranged between the sides (54) and the carrier element (22).

13. Wiper device (10) according to one of the above claims, **characterised in that** the connecting element (24) and the carrier element (22) present axial pins (58) running crossways in relation to the longitudinal direction and arranged in a line (56), which engage at least in sections in pin receptacles provided on the carrier element (22) and connecting element (24) for at least partial pivotability.

14. Wiper device (10) according to claim 12 and 13, **characterised in that** the two sides (54) of the connecting element (24) and the carrier element (22) present openings running crossways in relation to the longitudinal direction and arranged in a line (56) which receive an axial bolt (58).

15. Wiper device (10) according to one of the above claims, **characterised in that** the carrier element (22) is arranged directly on the support element (20).

## Revendications

1. Dispositif d'essuie-glace (10), en particulier pour nettoyer les vitres d'un véhicule, comportant un bras d'essuie-glace (14), un balai d'essuie-glace (16), qui est propre à être agencé sur le bras d'essuie-glace (14) et qui comporte des moyens de support (20), qui supportent la lame en caoutchouc (18) et qui peuvent être réalisés de préférence sous la forme d'un rail flexible allongé en forme de bande, et des moyens d'assemblage pour attacher le bras d'essuie-glace (14) à l'extrémité libre (12) du bras d'essuie-glace (14), lesdits moyens d'assemblage comportant un élément de support (22), disposé de manière fixe sur les moyens de support (20), et un élément d'assemblage (24), pivotant sous certaines conditions par rapport à l'élément de support (22), et l'élément d'assemblage (24) étant apte à être fixé de manière amovible à l'extrémité libre (12) du bras d'essuie-glace (14), **caractérisé en ce que** l'extrémité libre (12) du bras d'essuie-glace (14) comporte plusieurs, de préférence deux, pattes (30, 32) qui s'étendent dans la direction longitudinale et qui, dans la position montée, s'engagent dans des logements (34, 36) prévus sur l'élément d'assemblage (24), et **en ce que** les pattes (30, 32) sont réalisées d'un seul tenant avec l'extrémité libre (12) du bras d'essuie-glace (14) et s'avancent au moins par zones dans la direction orientée vers la vitre.

2. Dispositif d'essuie-glace (10) selon la revendication 1, **caractérisé en ce que** l'assemblage du bras d'essuie-glace (14) avec l'élément d'assemblage (24) est effectué dans la direction de l'axe longitudinal du bras d'essuie-glace (14), les pattes (30, 32) étant reçues dans les logements (34, 36).

3. Dispositif d'essuie-glace (10) selon l'une quelconque des revendications précédentes, **caractérisé en ce que** la face frontale (38) de l'extrémité libre (12) du bras d'essuie-glace (14), dans la position montée, est en appui, au moins par zones par conjugaison de forme, contre un bord d'appui (40) de l'élément d'assemblage (24).

4. Dispositif d'essuie-glace selon l'une quelconque des revendications précédentes, **caractérisé en ce que** l'extrémité libre (12) du bras d'essuie-glace (14) comporte des parties de fixation (44), qui s'étendent en grande partie transversalement à la direction longitudinale du bras d'essuie-glace (14) et, de préférence, en grande partie perpendiculairement à la vitre et qui, dans la position montée, coopèrent avec des parties d'actionnement (42), qui sont disposées sur l'élément d'assemblage (24) et qui, en cas d'actionnement, permettent de détacher le balai d'essuie-glace (16) du bras d'essuie-glace.

5. Dispositif d'essuie-glace (10) selon la revendication 4, **caractérisé en ce que** les parties de fixation (44) sont réalisées sous forme de bords de fixation qui, dans la position montée, sont enserrés par l'arrière par les parties d'actionnement (42), de manière à empêcher un mouvement de l'élément d'assemblage (24) par rapport au bras d'essuie-glace (14).

6. Dispositif d'essuie-glace (10) selon la revendication 5, **caractérisé en ce que** les parties d'actionnement (42) ne s'avancent pas au-delà du contour extérieur de l'extrémité libre du bras d'essuie-glace (14).

7. Dispositif d'essuie-glace (10) selon la revendication 4, 5 ou 6, **caractérisé en ce que** les parties d'actionnement (42) sont disposées sur les extrémités libres de pattes flexibles (46), qui sont disposées respectivement sur les côtés face à face de l'élément d'assemblage (24) en s'étendant dans la direction longitudinale, de telle sorte elles sont en grande partie parallèles à la vitre et peuvent être actionnées l'une vers l'autre à l'encontre d'une force de précontrainte.

8. Dispositif d'essuie-glace (10) selon l'une quelconque des revendications précédentes, **caractérisé en ce que** l'extrémité libre du bras d'essuie-glace (14) possède une partie profilée en U, dont le côté ouvert est orienté vers la vitre à nettoyer.

9. Dispositif d'essuie-glace (10) selon la revendication 8, **caractérisé en ce que** la partie profilée en U, dans la position montée, s'engage, par conjugaison de forme au moins par zones, autour et/ou derrière l'élément d'assemblage (24) pour absorber les forces transversales.

10. Dispositif d'essuie-glace (10) selon la revendication 8, **caractérisé en ce que** les pattes (30, 32) sont disposées sur la traverse (26) de la partie profilée en U et les parties de fixation (44) sont disposées sur les branches (28) de ladite partie.

11. Dispositif d'essuie-glace (10) selon l'une quelconque des revendications précédentes, **caractérisé en ce que** l'extrémité libre du bras d'essuie-glace (14) et, de préférence, la traverse (26) de la partie profilée en U comporte au moins un évidement (48), dans lequel l'élément d'assemblage (24) s'engage au moins par zones.

12. Dispositif d'essuie-glace (10) selon l'une quelconque des revendications précédentes, **caractérisé en ce que** l'élément d'assemblage (24) comporte une partie avec une section largement en forme de U, dont les branches (54), dans la position montée, s'engagent autour et/ou derrière l'élément de support (22), sachant que des moyens de pivotement sont disposés entre les branches (54) et l'élément de support (22).

13. Dispositif d'essuie-glace (10) selon l'une quelconque des revendications précédentes, **caractérisé en ce que** l'élément d'assemblage (24) ou l'élément de support (22) comporte des tourillons (58) disposés dans une ligne (56) et s'étendant transversalement à la direction longitudinale, lesquels, au moins pour un pivotement conditionnel, s'engagent au moins par zones dans les logement prévus sur l'élément de support (22) ou l'élément d'assemblage (24).

14. Dispositif d'essuie-glace (10) selon les revendications 12 et 13, **caractérisé en ce que** les deux branches (54) de l'élément d'assemblage (24) et l'élément de support (22) comportent des ajours, disposés dans une ligne (56) et s'étendant transversalement à la direction longitudinale, lesquels reçoivent un tourillon (58).

15. Dispositif d'essuie-glace (10) selon l'une quelconque des revendications précédentes, **caractérisé en ce que** l'élément de support (22) est disposé directement sur le moyen de support (20).
